# FASCICULE DE BREVET EUROPEEN

(11) **EP 3 551 326 B1**
(45) Date de publication et mention de la délivrance du brevet: **23.07.2025**
(21) Numéro de dépôt: 17829226.4
(22) Date de dépôt: 06.12.2017
(51) Int. Cl.: B01J 19/10

(54) **PROCEDE D'AMELIORATION DU MOUILLAGE D'UNE SURFACE D'UN SUBSTRAT SOLIDE PAR UN METAL LIQUIDE**
VERFAHREN ZUR VERBESSERUNG DER BENETZUNG EINER OBERFLÄCHE EINES FESTEN SUBSTRATS DURCH EIN FLÜSSIGMETALL
METHOD FOR IMPROVING THE WETTING OF A SURFACE OF A SOLID SUBSTRATE BY A LIQUID METAL

(30) Priorité: 12.12.2016 FR 1662338
(43) Date de publication de la demande: 16.10.2019
(73) Titulaire: Constellium Issoire, 63500 Issoire (FR)
(72) Inventeur: ACHARD, Jean-Louis, 38220 Vizille (FR); TAINA, Fabio, 63100 CLERMONT-FERRAND (FR)
(74) Mandataire: Constellium - Propriété Industrielle
(86) Numéro de dépôt international: PCT/FR2017/053416
(87) Numéro de publication internationale: WO 2018/109319

(56) Documents cités:
- CA-A- 1 230 078
- CN-A- 1 132 266
- CN-C- 1 219 106
- FR-A1- 3 026 845
- JP-A- H08 292 179
- US-A- 3 733 889
- US-A- 4 056 434

## Description

### DOMAINE TECHNIQUE

Le domaine technique de l'invention est la modification des propriétés de mouillage d'une surface d'un matériau vis-à-vis d'un métal liquide, sous l'effet d'une exposition à des ondes ultrasonores de forte puissance.

### ART ANTERIEUR

Dans certaines applications, il est nécessaire de constituer une couche d'un métal, dit métal de revêtement, sur un substrat. C'est par exemple le cas de fils d'aluminium destinés à être utilisés en tant que conducteurs d'électricité. La faible masse de ces fils les rend particulièrement adaptés à des utilisations dans l'automobile ou l'aéronautique. Du fait de la formation d'une couche d'oxyde isolante en surface, les fils d'aluminium présentent une résistance de surface élevée, ce qui est préjudiciable à l'obtention de connexions électriques de qualité. Lorsque la section des fils est importante, un revêtement par une couche de nickel a été décrit dans le brevet FR2796656. La méthode objet de ce brevet est opérationnelle pour des fils dont le diamètre est voisin de 0.5 cm, mais n'est pas satisfaisante sur des fils de plus faible diamètre, par exemple 0.2 mm, car trop lente.

FR3026845 décrit un procédé de mouillage d'une sonotrode. Le procédé comprend les étapes suivantes : : a) Fournir un premier bain d'un métal liquide (1) comprenant de l'aluminium avec une teneur X et du magnésium avec une teneur Y, la teneur Y en magnésium étant différente de zéro, b) Plonger au moins en partie une sonotrode (3) formée en un matériau inerte à l'aluminium liquide, dans le premier bain de métal liquide (1), et c) Appliquer des ultrasons de puissance à la sonotrode (3) de sorte à exciter le métal liquide (1) jusqu'à l'obtention du mouillage (5) de la sonotrode (3) par le métal liquide (1).

CN 1 132 266 A décrit un procédé de traitement d'un substrat solide par ultrason.

Des traitements de surface chimiques ou électrochimiques sont en cours de développement, de façon à améliorer l'adhésion d'un métal de revêtement de type étain ou tungstène, sur un fil d'aluminium.

Les inventeurs ont démontré qu'une autre méthode permet d'obtenir une bonne adhésion d'un métal de revêtement, en phase liquide, sur un substrat, par exemple un substrat d'aluminium. Ils ont montré que la mouillabilité du substrat peut être augmentée, par un procédé physique simple à mettre en œuvre et compatible avec des applications industrielles. Ils ont également constaté que l'augmentation de la mouillabilité peut être mise à profit dans d'autres applications, dépassant l'application d'un revêtement métallique sur un substrat.

### EXPOSE DE L'INVENTION

Un objet de l'invention est un procédé de traitement d'un substrat solide, comportant les étapes suivantes :
a) mise en contact du substrat solide avec un métal liquide, confiné dans une enceinte;
b) propagation d'une onde ultrasonore, dite de puissance, émise par un dispositif générateur d'ultrasons de puissance dans le métal liquide, l'onde ultrasonore de puissance se propageant dans le métal liquide avant d'atteindre une surface du substrat solide, de telle sorte qu'au niveau de ladite surface du substrat solide, la densité de puissance de l'onde ultrasonore de puissance est supérieure à un seuil de cavitation du métal liquide, la fréquence de l'onde ultrasonore de puissance étant comprise entre 40 kHz et 250 kHz ;
c) suite à la propagation de l'onde ultrasonore de puissance, obtention de bulles de cavitation dans le métal liquide, les bulles de cavitation atteignant la surface du substrat solide, l'interaction des bulles de cavitation avec la surface du substrat solide augmentant la mouillabilité de cette dernière par le métal liquide. et dans lequel l'onde ultrasonore de puissance, se propageant depuis le générateur de puissance, traverse une surface, dite d'interface, s'étendant au contact du métal liquide, le procédé comportant une formation de bulles de cavitation à l'intérieur d'un cône, dit cône d'hyper-cavitation, dans lequel la densité des bulles de cavitation est plus élevée qu'à l'extérieur du cône, le cône d'hyper-cavitation s'étendant dans le métal liquide à partir de la surface d'interface, le procédé étant tel que lors de l'étape c), le substrat solide est disposé à l'extérieur du cône d'hyper-cavitation.

Par seuil de cavitation, on entend une densité de puissance de l'onde ultrasonore de puissance, au-delà de laquelle des bulles de cavitation se forment dans le métal liquide. Il peut s'agir d'une densité volumique de puissance ou d'une densité surfacique de puissance. D'une façon générale, lors de l'étape b), la densité surfacique de puissance est supérieure à 1 W/cm², voire à 5 ou 10 W/cm².

Le substrat solide est formé d'un premier matériau, dont la température de fusion est supérieure à celle du métal liquide.

Selon un mode de réalisation préféré, et de préférence comprise entre 40 kHz et 80 kHz. Cela permet d'augmenter la mouillabilité de la surface du substrat solide par le métal liquide sans dégrader l'état de surface du substrat solide.

Avantageusement, lors de l'étape c), l'onde acoustique de puissance se propage, à l'intérieur de l'enceinte, dans le métal liquide, selon une distance de propagation supérieure à 1 cm, et de préférence supérieure à 5 cm.

La surface d'interface peut notamment être une paroi solide à travers laquelle se propage l'onde ultrasonore de puissance. Il peut s'agir d'une partie de la paroi de l'enceinte, ou d'une paroi délimitant un guide d'onde à travers lequel se propage l'onde acoustique de puissance.

Selon un mode de réalisation, le substrat solide peut être un substrat métallique ou en céramique ; le procédé comporte alors les étapes supplémentaires suivantes:
d) exposition du substrat à l'onde ultrasonore de puissance durant une durée d'exposition, de préférence comprise entre 1 seconde et 1 minute, le métal liquide formant une couche, dite couche de revêtement sur le substrat ;
e) retrait du substrat de l'enceinte;
f) suite au retrait, solidification du métal liquide, de façon à former un dépôt sur le substrat.

Selon ce mode de réalisation, le substrat peut être métallique, le métal composant le substrat ayant une température de fusion strictement supérieure à celle du métal liquide. Le métal liquide peut être un métal électriquement conducteur, de telle sorte que le dépôt formé lors de l'étape f) est un dépôt électriquement conducteur. Le métal liquide peut notamment comporter de l'étain, du zinc ou du plomb. L'épaisseur du dépôt formé lors de l'étape f) est de préférence comprise entre 5 µm et 2 mm.

Selon un mode de réalisation, le métal liquide comporte de l'aluminium. Il peut alors comporter du magnésium, la fraction massique du magnésium étant de préférence inférieure à 1%.

Selon un mode de réalisation :
- un dispositif ultrasonore de contrôle propage une onde ultrasonore, dite de contrôle, dans le métal liquide, à travers une surface dite de couplage, la surface de couplage étant une surface du substrat solide s'étendant au contact du métal liquide ;
- le substrat solide est délimité par ladite surface de couplage ;
de telle sorte que lors de l'étape c), la mouillabilité de la surface du substrat solide, par le métal liquide, est augmentée de façon améliorer une transmission de l'onde ultrasonore de contrôle dans le métal liquide, à travers la surface de couplage. La densité de puissance de l'onde ultrasonore de contrôle, dans le métal liquide, est généralement inférieure au seuil de cavitation.

Le dispositif ultrasonore de contrôle peut être placé à l'extérieur de l'enceinte, la surface de couplage correspondant alors à une interface entre l'enceinte et le métal liquide à travers laquelle se propage l'onde ultrasonore de contrôle, le substrat solide étant formé par une partie de l'enceinte délimitée par la surface de couplage.

Le dispositif ultrasonore de contrôle peut être confiné dans une enveloppe de confinement, l'enveloppe de confinement étant plongée dans le métal liquide, la surface de couplage correspondant à une interface de l'enveloppe de confinement avec le métal liquide, à travers laquelle se propage l'onde ultrasonore de contrôle, le substrat solide étant formé par une partie de l'enveloppe de confinement délimitée par la surface de couplage.

Selon ce mode de réalisation, l'enceinte peut être une cuve d'un réacteur nucléaire, le métal liquide comportant du sodium ou du plomb.

D'autres avantages et caractéristiques ressortiront plus clairement de la description qui va suivre, de modes particuliers de réalisation de l'invention, donnés à titre d'exemples non limitatifs, et représentés sur les figures listées ci-dessous.

### FIGURES

La figure 1A représente un premier mode de réalisation de l'invention. La figure 1B représente un deuxième mode de réalisation de l'invention. La figure 1 C représente un détail de la figure 1A. La figure 1D représente un détail de la figure 1B.
Les figures 2A et 2B montrent une vue selon une coupe transversale d'un fil en alliage d'aluminium ayant été plongé dans un bain d'étain liquide, respectivement sans et avec mise en œuvre de l'invention. La figure 2C est une vue de détail de la figure 2B. Les figures 2D et 2E montrent une vue selon une coupe longitudinale d'un fil d'alliage d'aluminium ayant été plongé dans un bain d'étain liquide en mettant en œuvre l'invention. La figure 2E est un détail de la figure 2D.
La figure 3A est une observation au microscope électronique à balayage d'une coupe transversale d'un fil d'aluminium auquel on a appliqué un procédé selon l'invention. La figure 3B représente un détail de la figure 3A. Les figures 3C, 3D, 3E et 3F sont des spectres de fluorescence X correspondant à différents points d'analyse de la figure 3B.
La figure 4A est une observation au microscope électronique à balayage d'une coupe longitudinale d'un fil d'aluminium auquel on a appliqué un procédé selon l'invention. La figure 4B représente une région d'intérêt de la figure 4A. Les figures 4C, 4D, 4E et 4F sont des spectres de fluorescence X correspondant à différents points d'analyse de la figure 4B.
La figure 5A est une observation au microscope électronique à balayage d'une coupe transversale d'une plaque d'aluminium à laquelle on a appliqué un procédé selon l'invention.
Les figures 5B et 5C représentent deux régions d'intérêt de la figure 5A. Les figures 5D, 5E, 5F, sont des spectres de fluorescence X correspondant à différents points d'analyse de la figure 5B.
Les figures 5G et 5H sont des spectres de fluorescence X correspondant à différents points d'analyse de la figure 5C.
Les figures 6A et 6B sont des exemples de mise en œuvre de l'invention selon une première application, de façon à former un dépôt métallique sur un substrat.
Les figures 7A et 7C schématisent deux exemples de mise en œuvre de l'invention selon une deuxième application relative au contrôle non destructif d'une cuve d'un réacteur nucléaire. Les figures 7B et 7D sont des détails des figures 7A et 7C respectivement.

### EXPOSE DE MODES DE REALISATION PARTICULIERS

Le recours à des ultrasons est courant dans différentes applications industrielles : à forte puissance, les ultrasons peuvent par exemple être mis à profit pour des applications de nettoyage. A faible puissance, ils sont couramment utilisés pour des applications de contrôle non destructif dans des matériaux ou des structures.

L'invention est basée sur l'utilisation avantageuse d'ultrasons de puissance pour augmenter la mouillabilité d'une surface d'un substrat solide par un métal liquide. En effet, les inventeurs ont constaté que l'application d'une onde ultrasonore de forte puissance à un substrat métallique, ou en céramique, plongé dans un bain formé par un métal liquide, permet d'augmenter la mouillabilité de la surface du substrat par le métal liquide.

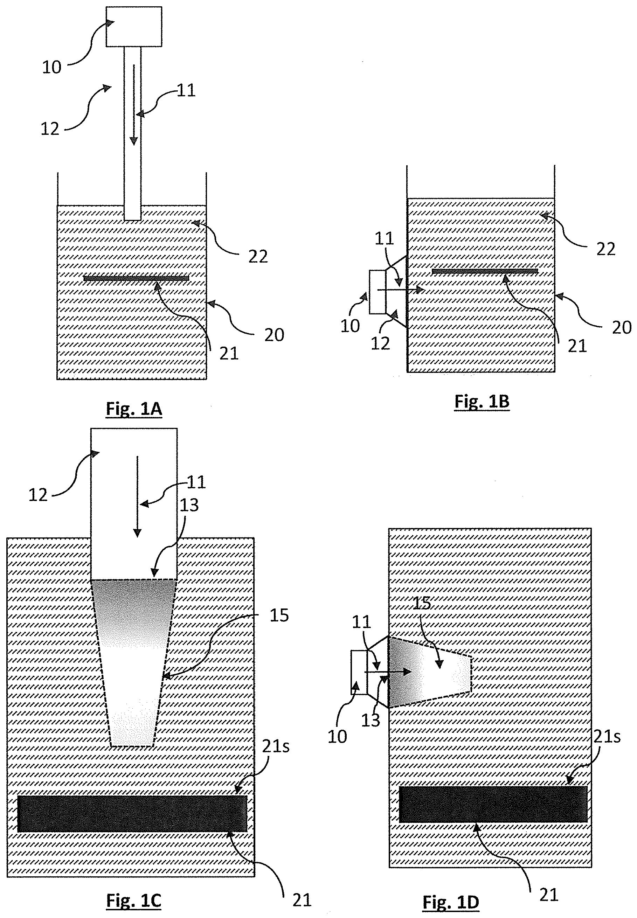

Selon une première application, l'invention est mise à profit pour déposer une couche d'un métal sur un substrat. Un premier mode de réalisation est représenté sur la figure 1A. Un substrat solide 21, formé par un premier matériau, par exemple un alliage d'aluminium, ou par une céramique, est plongé dans un bain d'un deuxième métal 22 à l'état liquide. Dans cet exemple, le métal liquide est de l'étain. Le bain de métal liquide est contenu dans un creuset formant une enceinte 20. Dans cet exemple, la masse de métal liquide 22 est de 5 Kg, le bain étant porté à une température de 350°C. La température de fusion du métal liquide doit être strictement inférieure à la température de fusion du premier matériau formant le substrat.

Un dispositif générateur d'ultrasons 10, dit générateur de puissance (ou moteur à ultrasons), est disposé à proximité de l'enceinte 20, un guide d'onde 12 s'étendant entre le générateur d'ultrasons 10 et le bain de métal liquide 22. Le guide d'onde 12 plonge dans le métal liquide 22, et permet la propagation d'une onde ultrasonore 11 émise par le générateur d'ultrasons 10 dans le métal liquide 22. Le générateur d'ultrasons 10 est par exemple un transducteur piézo-électrique, apte à être déformé lorsqu'il est soumis à une polarisation électrique alternative, la déformation étant à l'origine de l'onde acoustique ultrasonore 11. L'onde ultrasonore 11 se propage dans le guide d'onde 12. Le guide d'onde peut être formé par un métal, par exemple à base de titane, ou par une céramique rigide.

L'onde ultrasonore 11 émise par le générateur 10 est une onde de puissance élevée. Par puissance élevée, on entend comprise entre 10W et 200W ou davantage, de sorte que la densité de puissance au niveau du substrat 21 soit supérieure à un seuil de cavitation du métal liquide 22. Le seuil de cavitation peut être exprimé selon une densité surfacique de puissance, auquel cas il est supérieur à 1 W/cm², voire 5 W/cm², voire supérieur à 10 W/cm², en fonction du métal liquide 22 et de la température. Aussi, de préférence, la puissance de l'onde ultrasonore 11 est ajustée de façon à obtenir une densité surfacique de puissance, sur tout ou partie de la surface du substrat solide, supérieure au seuil de cavitation du métal liquide 22.

L'apparition d'une cavitation dans un milieu liquide donne naissance à des ondes acoustiques, dont la détection permet de détecter la survenue de ladite cavitation. Le seuil de cavitation, dans un métal liquide, peut être déterminé expérimentalement par des méthodes basées sur la détection de telles ondes acoustiques. Des exemples sont notamment donnés dans les documents FR2404850 ou EP0221796. Une méthode optique de détection de cavitation est par ailleurs décrite dans WO2006034040.

Les inventeurs ont constaté que la formation et la propagation de bulles de cavitation à l'interface entre le substrat 21 et le métal liquide 22 sont susceptibles d'améliorer la mouillabilité du substrat 21 par le métal liquide22. Cet effet est attribué à l'interaction des bulles de cavitation au contact de la surface du substrat 21, ou au voisinage de cette dernière, et notamment de l'implosion des bulles de cavitation. Cela entraîne une diminution de la tension de surface au niveau de l'interface entre le substrat 21 et le métal liquide 22. Cela augmente la mouillabilité de la surface du substrat 21 par le métal liquide 22. On a également observé que lorsque le substrat comporte une couche d'oxyde, la cavitation formée à l'interface du substrat et du métal liquide permet de réduire ou d'éliminer la couche d'oxyde, ce qui facilite une liaison directe entre le substrat 21 et le métal liquide 22. Lorsque la fréquence de l'onde ultrasonore de puissance 11 diminue, l'impact des bulles de cavitation sur le substrat forme des cavités 27 à la surface du substrat, sous l'effet d'une dissolution locale du substrat. Les cavités 27 peuvent présenter une profondeur de quelques dizaines microns voire quelques centaines de microns à partir de la surface du substrat. La formation de ces cavités peut dégrader l'état de surface du substrat.

En conséquence de l'augmentation de la mouillabilité de la surface du substrat 21 par le métal liquide 22, une couche 25 de métal liquide, dite couche de revêtement, se forme sur le substrat. En retirant le substrat 21 du bain de métal liquide, la couche de revêtement 25 subsiste autour du substrat 21. Elle se refroidit et se solidifie, en formant un dépôt solide durable dans le temps. La fréquence de l'onde ultrasonore, dite de puissance, est de préférence comprise entre 10 kHz et 250 kHz, et de préférence comprise entre 10 et 100 kHz. On considère que plus la fréquence est élevée, moins l'effet des bulles de cavitation à la surface du substrat est important, réduisant la formation de cavités 27. En effet, lorsque la fréquence augmente, la taille des bulles de cavitation diminue. De préférence, la fréquence de l'onde ultrasonore de puissance 11 est ajustée de manière à limiter, voire éviter, l'apparition de telles cavités, de façon à préserver l'état de surface du substrat.

Ainsi, il est avantageux que la fréquence de l'onde ultrasonore 11 soit supérieure à 40 kHz. La plage 40 kHz - 80 KHz est considérée comme optimale, de façon que l'effet des bulles de cavitation sur le substrat 21 soit superficiel, sans formation de cavités.

Comme représenté sur les figures 1A à 1D, l'onde ultrasonore 11 émise par le générateur 10 se propage vers l'enceinte 20 en traversant une surface 13, dite surface d'interface, s'étendant au contact du métal liquide 22, à travers laquelle l'onde ultrasonore 11 se propage pour atteindre le métal liquide 22. Dans l'exemple des figures 1A et 1C, l'onde ultrasonore 11 est propagée jusqu'au métal liquide 22 par un guide d'onde 12, dont une extrémité proximale est placée au contact du générateur, et dont une extrémité distale plonge dans le métal liquide 22. Dans ce cas, la surface d'interface 13 correspond à l'extrémité distale du guide d'onde 12 s'étendant orthogonalement à la direction de propagation de l'onde ultrasonore 11. Dans l'exemple des figures 1B et 1D, la surface d'interface 13 est la paroi de l'enceinte 20, s'étendant au contact du métal liquide, et placée entre le générateur de puissance 10 et le métal liquide. D'une façon générale, la surface d'interface 13 est une surface en contact avec le métal liquide 22, et à travers laquelle se propage l'onde ultrasonore de puissance 11. Il peut s'agir d'une paroi solide, en l'occurrence une paroi du guide d'onde ou une paroi de l'enceinte. Lorsque la puissance de l'onde ultrasonore 11 est trop élevée, les bulles de cavitation peuvent s'organiser au voisinage de la surface d'interface 13 en formant un volume conique 15, dont la base s'affine en fonction de la distance par rapport à la surface d'interface. La formation de telles bulles de cavitation à l'intérieur d'un cône est par exemple décrite dans la publication Dubus B. "Génération d'ondes de chocs et focalisation à courte distance dans le champ de cavitation ultrasonore à basse fréquence", 10ième congrès français d'acoustique, Lyon, 12-16 avril 2010. A l'intérieur d'un tel cône, dit d'hyper cavitation, la densité volumique des bulles de cavitation est plus élevée que dans le reste de l'enceinte, à l'extérieur du cône. Ces bulles de cavitation sont essentiellement dues à des germes de cavitation présents au niveau de la surface d'interface 13.

Il est préférable d'éviter une exposition trop importante du substrat 21 à la forte densité volumique de bulles de cavitation à l'intérieur du cône d'hyper cavitation 15, car cela peut entraîner une dégradation de l'état de surface du substrat. Ainsi, le substrat 21 est disposé, de préférence, à une distance suffisante de la surface d'interface 13, et à l'extérieur de l'éventuel cône d'hyper cavitation 15. Ainsi, l'onde ultrasonore de puissance 11 se propage dans le métal liquide 22, selon une distance de propagation supérieure à 1 cm, voire à 5 cm, avant d'atteindre le substrat 21. Cela permet d'éviter une interaction du substrat 21 avec les bulles de cavitation formées au voisinage de la surface d'interface 13 ou dans le cône d'hyper-cavitation 15.

Les figures 1B et 1D représentent un mode de réalisation selon lequel le dispositif générateur d'ultrasons de puissance 10 est couplé à un guide d'onde 12, ce dernier s'étendant entre le générateur d'ultrasons 10 est l'enceinte 20. Ainsi, le guide d'onde n'est pas plongé dans le métal liquide 22, mais transmet l'onde ultrasonore 11 à travers une paroi de l'enceinte 20. Selon une variante, le générateur d'ultrasons 10 peut être disposé directement contre l'enceinte 20, sans guide d'onde 12 s'étendant entre le générateur et l'enceinte. Dans une telle configuration, la surface d'interface 13 correspond à une paroi de l'enceinte 20 au contact du métal liquide 22, et à travers laquelle se propage l'onde ultrasonore de puissance 11. La figure 1D représente la formation d'un cône d'hyper-cavitation 15 s'étendant dans le métal liquide 22 à partir de la surface d'interface 13.

Quel que soit le mode de réalisation, la durée de l'exposition du substrat 21 à l'onde ultrasonore 11 est comprise entre 1 seconde et quelques minutes. Elle est de préférence comprise entre 1 seconde et 30 secondes.

### ESSAIS EXPERIMENTAUX

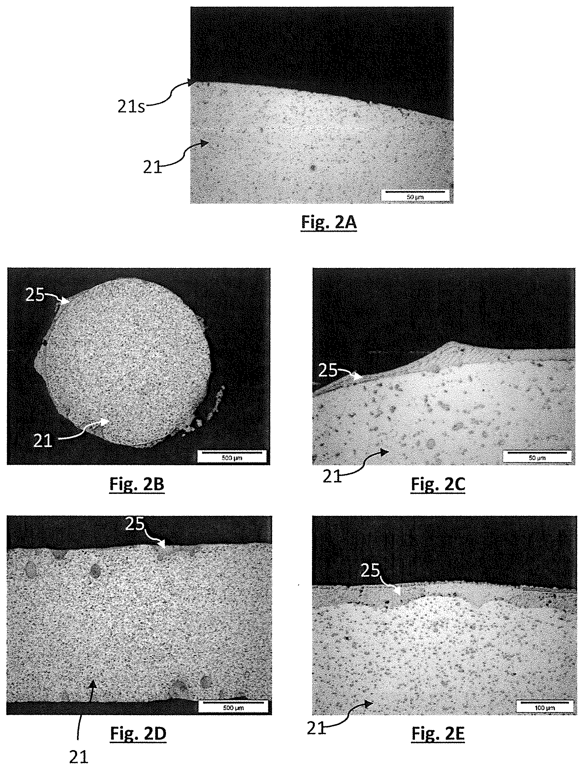

Le dispositif représenté sur la figure 1A a été mis en œuvre pour effectuer des essais expérimentaux. Le substrat utilisé a tout d'abord été un fil d'alliage d'aluminium de type 5XXX de diamètre compris entre 1.5 et 2 mm. Le métal liquide 22 était constitué d'étain porté à une température de 350°C. Le substrat a été plongé dans l'enceinte 20 durant une durée comprise entre 5 et 10 secondes. Le substrat 21 n'a pas fait l'objet d'un prétraitement de type nettoyage, dégraissage ou décapage avant d'être plongé dans l'enceinte 20. La surface du fil comportait une fine couche d'alumine (oxyde d'aluminium). Au cours d'un premier essai témoin, le substrat a été plongé dans l'enceinte puis retiré, sans avoir été exposé à une onde ultrasonore. La figure 2A représente une coupe du fil dans le sens travers, c'est-à-dire une coupe transversale. L'étain ne mouille pas le substrat et lorsque le substrat est retiré de l'enceinte, aucun dépôt d'étain ne subsiste au niveau de la surface du substrat.

On a ensuite effectué un deuxième essai, au cours duquel un fil d'aluminium en alliage 5XXX de diamètre 1.5 mm a été plongé dans un bain d'étain liquide. Les paramètres expérimentaux sont les suivants :
- guide d'onde : Titane TA6V - longueur 375 mm - diamètre 30 mm ;
- fréquence de l'onde ultrasonore : 20 kHz
- distance entre le guide d'onde et le substrat : 10 cm

Après l'exposition à l'onde ultrasonore 11, le substrat 21 a été retiré du métal liquide, puis refroidi.

La figure 2B représente une observation, au microscope optique d'une coupe du substrat dans le sens travers. On distingue la présence d'une couche d'étain 25, formant un dépôt autour du substrat 21. La figure 2C représente un détail de la figure 2B. Elle permet d'observer que la couche d'étain 25 s'étend tout autour du substrat 21, selon une épaisseur comprise entre 5 et 30 µm.

La figure 2D représente une coupe du substrat 21 suivant le sens long (ou coupe longitudinale). La figure 2E montre un détail de la figure 2D. On observe que la couche d'étain 25 s'étend selon toute la longueur du champ d'observation, selon une épaisseur comprise entre 5 µm et 30 µm.

Dans un troisième essai, le substrat utilisé était une plaque d'aluminium d'épaisseur 2.5 mm. La formation d'une couche d'étain sur la plaque d'aluminium a également été observée, l'épaisseur de la couche d'étain étant comprise entre 10 et 50 µm.

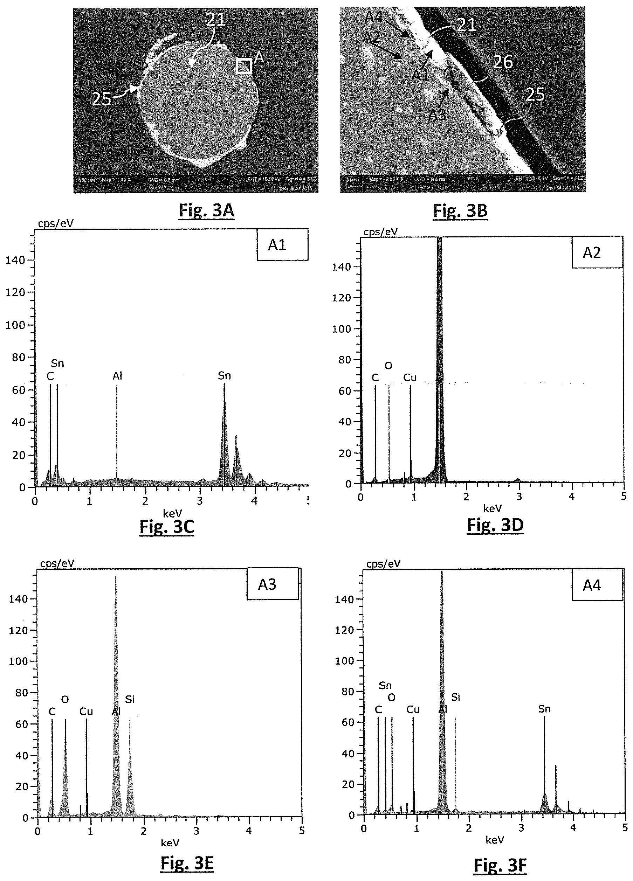

La figure 3A représente une observation au microscope électronique à balayage utilisant une source de rayonnement X à effet de champ, une coupe, dans le sens travers, d'un fil d'alliage d'aluminium 1XXX de diamètre 1 mm. Le fil a été plongé dans un bain d'étain liquide porté à 260°C et exposé à une onde ultrasonore 11 à la fréquence de 20 kHz, selon le mode de réalisation représenté sur la figure 1A. La puissance de l'onde était de 100 W. On observe une couche 25 d'étain déposée tout autour du substrat 21. Sur la figure 3A, on a délimité une région d'intérêt A, cette dernière faisant l'objet de la figure 3B. Sur cette région d'intérêt, on a identifié quatre points d'analyse, sur lesquels on a effectué une analyse par spectrométrie de fluorescence X. Les figures 3C, 3D, 3E et 3F sont des spectres correspondant respectivement aux points d'analyse A1, A2, A3 et A4 tracés sur la figure 3B. Sur chaque spectre, les énergies correspondant à des éléments recherchés sont repérées par des barres verticales. La figure 3C correspond à la couche de revêtement d'étain 25 et confirme le fait que cette couche est formée par le métal liquide, en l'occurrence l'étain. La figure 3D correspond au point A2, situé en profondeur dans le substrat 21. On obtient un spectre représentatif de l'alliage d'aluminium. La figure 3E correspond au point A3, et révèle une présence d'oxyde d'aluminium. On note qu'au niveau du point A3, la couche de revêtement 25 ne semble pas mouiller directement le substrat 21, mais une couche d'oxyde 26 résiduelle. La figure 3F correspond au point A4, situé à l'interface entre le substrat 21 et la couche de revêtement 25. Le spectre traduit une teneur majoritaire d'aluminium, avec une trace d'étain. Ainsi, à cet endroit, la couche d'oxyde a été éliminée, le métal liquide 22 mouillant directement le substrat 21. La cavitation semble avoir un effet de réduction progressive voire d'élimination de la couche d'oxyde 26 s'étendant autour du substrat. Lorsqu'elle l'élimine (point A4), une adhésion de la couche de revêtement 25 directement sur le substrat 21 est obtenue. Lorsqu'elle ne parvient pas à l'éliminer totalement (point A3), une couche d'oxyde 26 subsiste entre la couche de revêtement 25 et le substrat 21, la continuité électrique entre le substrat 21 et la couche de revêtement 25 n'est pas assurée. Cette continuité électrique est en particulier recherchée par exemple dans le cas d'un dépôt pour application de connectique électrique. Pour ce type d'application, on cherche donc à supprimer la couche d'oxyde.

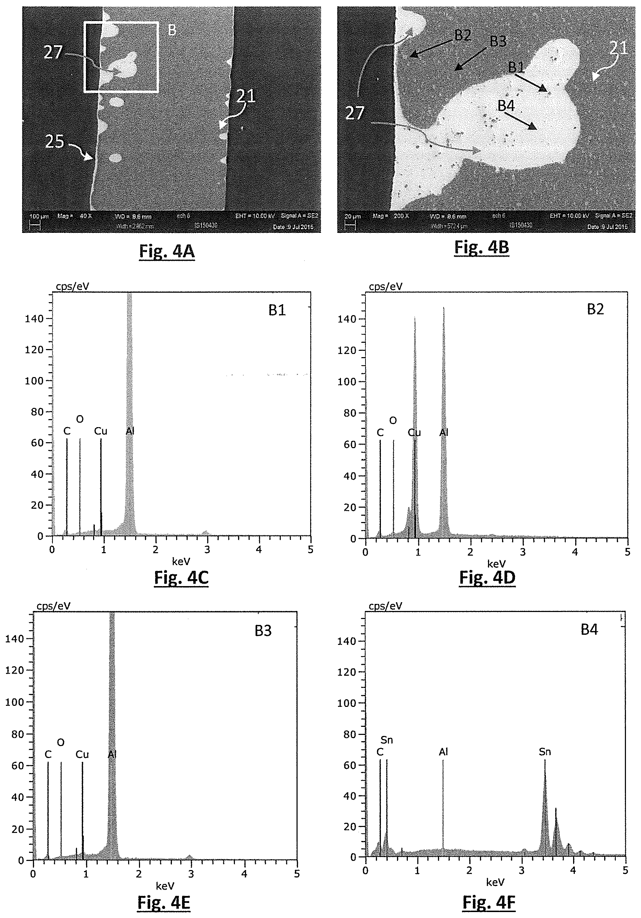

La figure 4A montre une observation au microscope électronique à balayage utilisant une source de rayonnement X à effet de champ, dans le sens long, d'un fil ayant subi un traitement similaire au fil décrit en lien avec les figures 3A à 3F, en augmentant la puissance de l'onde ultrasonore 11 appliquée. On observe une couche de revêtement 25 d'étain déposée tout autour du substrat 21, l'épaisseur de la couche étant de l'ordre de 10 µm. On observe également que la couche de revêtement 25 pénètre localement à l'intérieur du substrat, dans des cavités 27 dont la profondeur peut dépasser 100 µm ou 200 µm. Ainsi, le métal liquide 22 pénètre localement dans le substrat 21, les cavités 27 formant des pores ouverts. Sur la figure 4A, on a délimité une région d'intérêt B, correspondant à une cavité 27 et faisant l'objet de la figure 4B. Sur cette région d'intérêt, on a identifié quatre points d'analyse, ayant fait l'objet d'une analyse par spectrométrie de fluorescence X. Les figures 4C, 4D, 4E et 4F sont des spectres correspondant respectivement aux points d'analyse B1, B2, B3 et B4 tracés sur la figure 4B. Le point B1 (figure 4C) correspond à un résidu local d'aluminium. Ce résidu est noyé dans une cavité 27 de profondeur 200 µm, la cavité ayant été remplie par l'étain. Le point B2 (figure 4D) représente une inclusion de cuivre dans le substrat. Le point B3 (figure 4E) correspond au matériau du substrat, en l'occurrence l'alliage d'aluminium. Quant au point B4 (figure 4F), il est représentatif du matériau présent dans la cavité 27, en l'occurrence l'étain.

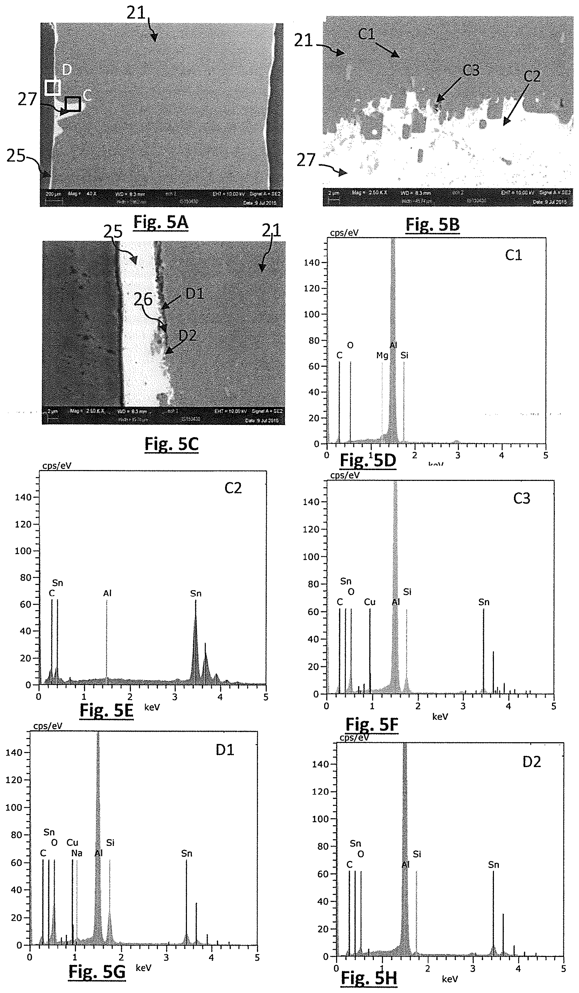

La figure 5A montre une observation au microscope électronique à balayage utilisant une source de rayonnement X à effet de champ, dans le sens long, d'un substrat 21 prenant la forme d'une tôle d'aluminium d'épaisseur 2,5 mm, ayant subi un traitement similaire au fil décrit en lien avec les figures 4A à 4F. On note la présence d'une couche de revêtement 25 d'étain de part et d'autre du substrat 21. Une cavité 27 est également visible. Sur la figure 5A, on a délimité deux régions d'intérêt C et D, faisant respectivement l'objet des figures 5B et 5C. La région d'intérêt C correspond à une cavité 27, s'étendant selon une profondeur d'environ 250 µm à partir de la surface de la tôle. Les figures 5A, 5B, 5C sont des spectres de fluorescence X correspondant respectivement aux points d'analyse C1, C2, et C3 tracés sur la figure 5B. Le point C1 (figure 5D) correspond au matériau formant le substrat 21, en l'occurrence l'alliage d'aluminium. Le point C2 (figure 5E) est représentatif du matériau remplissant la cavité 27, en l'occurrence l'étain. Le point C3 (figure 5F) correspond à l'interface entre le substrat 21 et la cavité 27, avec une dominante d'aluminium et des traces d'étain. Ainsi, dans la cavité 27, l'étain mouille directement l'aluminium.

Les figures 5G et 5H, sont des spectres de fluorescence X correspondant respectivement aux points d'analyse D1 et D2, tracés sur la figure 5B. Ces points d'analyse sont situés à l'interface entre le substrat 21 et la couche de revêtement d'étain 25. On observe, au niveau du point D1 (figure 5G), une trace résiduelle d'oxyde d'aluminium (pic d'oxygène d'amplitude élevée), tandis qu'au niveau du point D2 (figure 5H), le spectre est représentatif de l'alliage d'aluminium. A cet endroit, la couche d'oxyde a été éliminée, ce qui permet un mouillage du substrat directement par l'étain.

Les essais expérimentaux montrent que la formation de la couche de revêtement 25 se forme après destruction partielle ou totale de la couche d'oxyde 26 par les bulles de cavitation. Lorsque la puissance augmente, (ou que la fréquence diminue) des cavités 27 se forment à la surface du substrat, leur profondeur étant supérieure à 50 µm et pouvant dépasser 200 µm. De telles cavités peuvent entraîner une dégradation de l'état de surface du substrat 21.

Dans les exemples qui précèdent, le substrat 21 est métallique et est formé d'un métal. Des essais ont été mis en œuvre avec succès sur des substrats constitués d'un premier matériau non métallique. Le tableau ci-dessous résume les différentes configurations testées.

**Tableau 1 : configurations testées pour la première application**

| **Premier matériau (substrat)** | **Métal liquide** |
|---|---|
| Aluminium | Etain |
| Céramique SiAlON | Etain |
| Titane | Etain |
| Céramique SiAlON | Etain |
| Acier | Aluminium |
| Céramique SiAlON | Aluminium |
| Alumine | Aluminium |
| Acier | Aluminium |
| Titane | Aluminium |
| Graphite | Aluminium |

La céramique SiAlON référencée dans le tableau 1 est une céramique connue de l'homme du métier, et désignée par le terme oxynitrure de silicium et d'aluminium

Lorsque le métal liquide est de l'aluminium, il peut avantageusement comporter du magnésium, selon une concentration de 20 ppm, ou selon une fraction massique supérieure à 0,05% ou encore supérieure à 0,5% ou 0,7%, mais généralement inférieure à 1%. Cela diminue le seuil de cavitation de l'aluminium liquide. Une application visée est l'aluminisation d'un métal, par exemple d'acier.

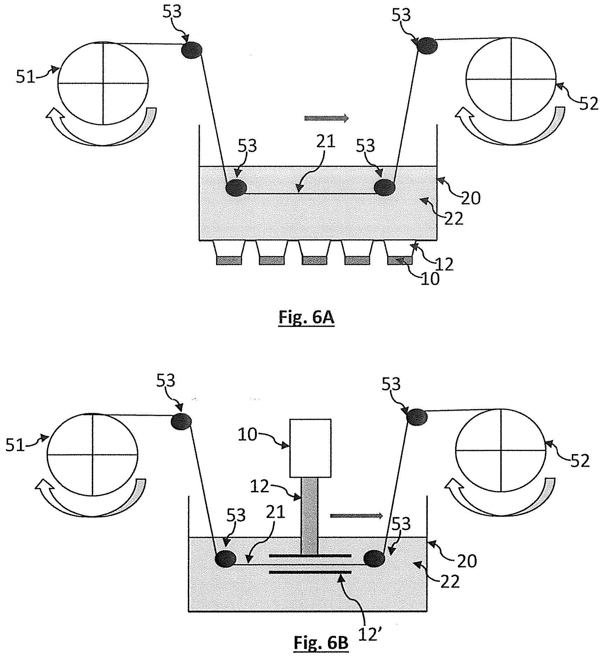

Le procédé, testé dans les essais expérimentaux précédemment décrits, peut être mis en œuvre de façon industrielle, par exemple à l'aide de dispositifs tels que représentés sur les figures 6A et 6B. Sur la figure 6A, on a représenté un dispositif comportant un rouleau de déroulement 51 et un rouleau d'enroulement 52. Un fil 21 se déroule du rouleau de déroulement 51 pour s'enrouler dans le rouleau d'enroulement 52, après avoir traversé un bain comportant un métal liquide 22 dans une enceinte 20. Le déplacement du fil est représenté par une flèche horizontale. Des roues libres 53 permettent d'ajuster la trajectoire du fil. Le bain de métal liquide 22 est soumis à une onde acoustique ultrasonore 11 produite par des générateurs 10 alignés sous le fond de l'enceinte 20, un guide d'onde 12 s'étendant entre chaque générateur 10 et le fond de l'enceinte. Le temps de parcours d'une section de fil dans le bain est ajusté en fonction de la vitesse d'entraînement, et peut être compris d'au moins 1 seconde, et de façon préférée entre 1 seconde et 1 minute et de façon encore plus préférée entre 10 secondes et 1 minute. Au cours de l'exposition à l'onde ultrasonore 11, le métal liquide se dépose autour du fil sous la forme d'une couche de revêtement 25. Lorsque le fil est retiré du bain liquide, la couche de revêtement 25 se solidifie et forme un dépôt. La figure 6B est une variante de la figure 6A. L'onde ultrasonore est générée par un générateur 10 couplé à un guide d'onde 12, ce dernier plongeant dans le métal liquide 22. L'onde acoustique 11 se propage par un guide d'onde annexe 12' de forme tubulaire, apte à se déformer pour propager l'onde acoustique 12' dans le métal liquide 22.

La formation d'une couche de revêtement 25 à la surface d'un substrat solide 21 peut avoir les applications suivantes :
- protection anti-corrosion ;
- formation d'une couche conductrice ;
- aide au soudage, par fusion locale de la couche de revêtement au niveau d'un point de soudure.

Selon une variante, un substrat peut subir successivement deux bains successifs, le premier bain étant destiné à former une première couche de revêtement de faible épaisseur, le deuxième bain visant à augmenter l'épaisseur de la couche de revêtement.

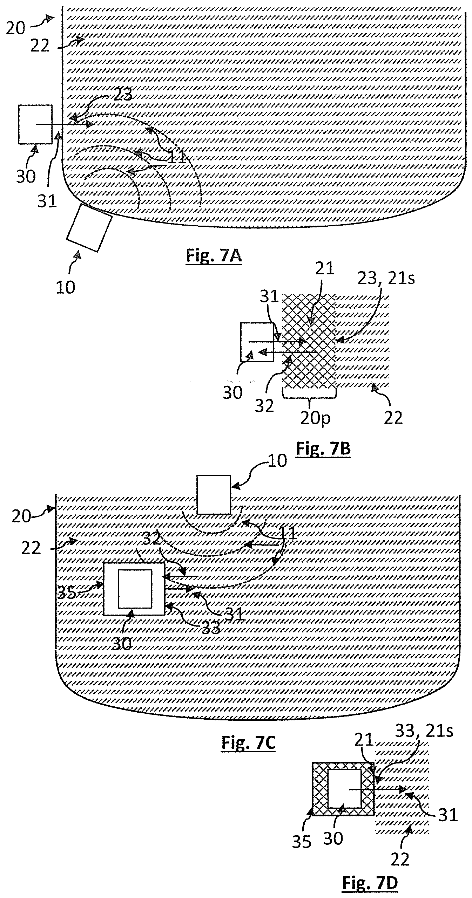

Selon une deuxième application, l'invention permet d'augmenter la mouillabilité d'un substrat solide 21 placé à l'interface entre un dispositif générateur d'ultrasons 30 dit de contrôle et un métal liquide 22. Le substrat solide 21 est alors soit une partie d'une paroi 20p de l'enceinte 20 contenant le métal liquide 22 (fig. 7A), soit une partie d'une enveloppe de confinement 35 confinant le dispositif ultrasonore de contrôle 30, l'enveloppe de confinement 35 étant plongée dans le métal liquide 22 (fig. 7C). L'augmentation de la mouillabilité du métal liquide 22 est utilisée non pas pour former une couche de revêtement sur un substrat, comme précédemment décrit, mais pour améliorer des propriétés de transmission d'une onde ultrasonore dite de contrôle 31, cette dernière étant destinée à des contrôles non destructifs dans l'enceinte.

La figure 7A représente une cuve 20 d'un réacteur à neutrons rapides, dont le caloporteur est formé par un métal liquide 22, notamment du sodium liquide ou du plomb liquide. Contrairement à l'eau, équipant les réacteurs à eau pressurisée, le sodium liquide est optiquement opaque. Aussi, le recours à des ondes acoustiques s'avère utile pour le suivi d'exploitation en continu ou au cours d'opérations de maintenance. Les applications sont nombreuses : "visualisation" dans un milieu opaque, mesure de distances, métrologie de surface, détection de défauts ou de fissures. Une contrainte notable est la haute température à laquelle est porté le caloporteur pour le maintenir dans un état liquide, la température variant typiquement entre 200°C pour les opérations de maintenance à 550°C lorsque le réacteur est en fonctionnement. Un dispositif ultrasonore de contrôle 30 est utilisé, de façon à émettre une onde ultrasonore de contrôle 31, et peut également faire office de détecteur, de façon à mesurer une durée entre l'émission d'une onde ultrasonore de contrôle et la détection d'une onde ultrasonore réfléchie. L'onde ultrasonore de contrôle 31 se propage selon une densité surfacique de puissance inférieure à la densité de puissance de l'onde ultrasonore de puissance 11, par exemple 10 fois inférieure. La fréquence de l'onde ultrasonore de contrôle 31 est supérieure à la fréquence de l'onde ultrasonore de puissance 11. Sa fréquence est typiquement comprise entre 1 MHz et 100 MHz. La densité de puissance de l'onde ultrasonore de contrôle, dans le métal liquide, est inférieure au seuil de cavitation.

Le dispositif ultrasonore de contrôle 30 peut être disposée contre la cuve, à l'extérieur de cette dernière, de façon à propager l'onde ultrasonore de contrôle 31 à travers une paroi 20p de la cuve. La cuve forme alors une enceinte 20, à travers laquelle l'onde ultrasonore 31 se propage entre le dispositif ultrasonore de contrôle 30 et le métal liquide 22. La surface de l'enceinte, au contact du métal liquide, et à travers laquelle l'onde ultrasonore 31 se propage, forme une surface dite de couplage 23. Afin d'optimiser une transmission de l'onde ultrasonore de contrôle 31 à travers la surface de couplage 23, la mouillabilité du métal liquide 22 sur la surface de couplage peut être améliorée en exposant la surface de couplage 23 à l'onde ultrasonore de puissance 11, telle que précédemment décrite. Cela facilite la transmission de l'onde ultrasonore de contrôle 31 à travers la paroi de la cuve 20p. Ainsi, la surface de couplage 23 est exposée à une onde ultrasonore de puissance 11, émise par un générateur d'ultrasons de puissance 10. Comme on peut le voir sur la figure 7B, la surface de couplage 23 délimite un substrat solide 21, constitué du métal formant la paroi 20p de la cuve 20 au voisinage de la surface de couplage. L'application de l'onde ultrasonore de puissance 11 augmente la mouillabilité de la surface du substrat 21 par le métal liquide 22 , et favorise une transmission de l'onde ultrasonore de contrôle 31 à travers la surface de couplage 23. Elle peut également favoriser la transmission d'une onde ultrasonore réfléchie 32 se propageant de la cuve jusqu'au dispositif ultrasonore de contrôle 30, à travers la surface de couplage.

Le générateur de puissance 10 est disposé de telle sorte que l'onde ultrasonore de puissance 11, au niveau de la surface de couplage 23, ait une densité de puissance supérieure au seuil de cavitation du métal liquide 22. La fréquence de l'onde ultrasonore de puissance 11 est de préférence comprise entre 10 et 250 kHz. De façon à éviter la formation de cavités dans la cuve, sous l'effet des bulles de cavitation, la fréquence de l'onde ultrasonore de puissance 11 est avantageusement supérieure à 40 kHz, et typiquement comprise entre 40 kHz et 80 KHz. Le générateur de puissance 10 peut être disposé à l'extérieur de la cuve 20 ou à l'intérieur de la cuve. De préférence, l'onde ultrasonore de puissance 11 se propage dans le métal liquide 22 selon une distance de propagation supérieure à 1 cm, et de préférence supérieure à 5 cm, avant d'atteindre la surface de couplage 23. Cette dernière forme une surface 21s du substrat. Cela évite d'exposer la surface de couplage 23 à une densité trop élevée de bulles de cavitation, comme décrit en lien avec la première application.

Selon une variante, représentée sur la figure 7C, le dispositif ultrasonore de contrôle 30 est immergé dans la cuve 20 et est confiné dans une enveloppe de confinement 35, formée selon un métal de confinement. Comme on peut le voir sur la figure 7D, l'enveloppe de confinement 35 définit alors une surface de couplage 33, s'étendant au contact du métal liquide, à travers laquelle l'onde de contrôle 31 se propage du dispositif ultrasonore de contrôle 30 vers le métal liquide 22. La surface de couplage 33 délimite un substrat solide 21, constitué du métal formant l'enveloppe de confinement 35. L'application de l'onde ultrasonore de puissance 11 augmente la mouillabilité du métal liquide 22 sur le métal de l'enveloppe de confinement 35 et favorise la transmission de l'onde ultrasonore de contrôle 31 à travers la surface de couplage 33. Elle peut également favoriser la transmission d'une onde ultrasonore réfléchie 32 se propageant de la cuve jusqu'au dispositif ultrasonore de contrôle 30. Le générateur de puissance 10 est disposé de telle sorte que l'onde ultrasonore de puissance 11, au niveau de la surface de couplage 23, ait une densité de puissance supérieure au seuil de cavitation du métal liquide. La fréquence de l'onde ultrasonore de puissance 11 est de préférence comprise entre 10 et 250 kHz. Une fréquence inférieure à 40 KHz, par exemple égale à 20 kHz, peut engendrer la formation de cavités dans l'enveloppe de confinement 35 au niveau de la surface de couplage 33. Cela n'est pas critique, dans la mesure où l'enveloppe de confinement 35 peut être remplacée.

Les configurations indiquées dans le tableau 2 peuvent être mises en œuvre dans le cadre de cette application.

**Tableau 2 : exemples de configurations en lien avec le deuxième mode de réalisation**

| Premier matériau (substrat) | Métal liquide |
|---|---|
| Titane | Sodium |
| Acier | Sodium |
| Acier inoxydable | Sodium |
| Céramique | Sodium |

La céramique peut être une céramique à base de silicium, d'aluminium, d'azote ou d'oxygène, par exemple des oxynitrures de silicium et d'aluminium (SiAlON), du nitrure de silicium (Si3N4) ou du rubis.

## Revendications

1. Procédé de traitement d'un substrat solide (21) comportant les étapes suivantes :
a) mise en contact du substrat solide (21) avec un métal liquide (22), confiné dans une enceinte ;
b) propagation d'une onde ultrasonore, dite de puissance (11), émise par un dispositif générateur d'ultrasons de puissance (10) dans le métal liquide (22), l'onde ultrasonore de puissance se propageant dans le métal liquide (22) avant d'atteindre une surface (21s) du substrat solide (21), de telle sorte qu'au niveau de ladite surface du substrat, la densité de puissance de l'onde ultrasonore de puissance (11) est supérieure à un seuil de cavitation du métal liquide, la fréquence de l'onde ultrasonore de puissance étant comprise entre 40 kHz et 250 kHz ;
c) suite à la propagation de l'onde ultrasonore de puissance (11), obtention de bulles de cavitation dans le métal liquide (22), les bulles de cavitation atteignant la surface (21s) du substrat solide (21), l'interaction des bulles de cavitation avec la surface (21s) du substrat solide (21) augmentant la mouillabilité de cette dernière (21s) par le métal liquide (22) et dans lequel l'onde ultrasonore de puissance (11), se propageant depuis le générateur de puissance (10), traverse une surface, dite d'interface (13),s'étendant au contact du métal liquide (22), le procédé comportant une formation de bulles de cavitation à l'intérieur d'un cône (15), dit cône d'hyper-cavitation, dans lequel la densité des bulles de cavitation est plus élevée qu'à l'extérieur du cône, le cône d'hyper-cavitation (15) s'étendant dans le métal liquide (22) à partir de la surface d'interface (13), le procédé étant tel que lors de l'étape c), le substrat solide (21) est disposé à l'extérieur du cône d'hyper-cavitation.

2. Procédé selon la revendication 1, dans lequel lors de l'étape b), l'onde acoustique de puissance (11) se propage, à l'intérieur de l'enceinte (20), dans le métal liquide (22), selon une distance de propagation supérieure à 1 cm, et de préférence supérieure à 5 cm.

3. Procédé selon la revendication 1 ou 2, dans lequel la surface d'interface (13) est une paroi solide à travers laquelle se propage l'onde ultrasonore de puissance.

4. Procédé selon l'une quelconque des revendications 1 à 3, dans lequel le substrat solide (21) est un substrat en céramique ou un substrat métallique tel que le métal composant le substrat a une température de fusion strictement supérieure à celle du métal liquide (22), le procédé comportant les étapes supplémentaires suivantes :
d) exposition du substrat (21) à l'onde ultrasonore de puissance (11) durant une durée d'exposition, de préférence comprise entre 1 seconde et 1 minute, le métal liquide (22) formant une couche, dite couche de revêtement (25) sur le substrat ;
e) retrait du substrat de l'enceinte;
f) suite au retrait, solidification du métal liquide, de façon à former un dépôt (25) sur le substrat.

5. Procédé selon la revendication 4, dans lequel le métal liquide (22) est un métal électriquement conducteur, de telle sorte que le dépôt (25) formé lors de l'étape f) est un dépôt électriquement conducteur.

6. Procédé selon la revendication 5, dans lequel le métal liquide comporte de l'étain, ou du zinc, ou du plomb.

7. Procédé selon l'une quelconque des revendications 4à 6, dans lequel l'épaisseur du dépôt (25) formé lors de l'étape f) est comprise entre 5 µm et 2 mm.

8. Procédé selon l'une quelconque des revendications 1 à 3, dans lequel le métal liquide (22) comporte de l'aluminium.

9. Procédé selon la revendication 8, dans lequel le métal liquide (22) comporte du magnésium selon une fraction massique inférieure à 1%.

10. Procédé selon l'une quelconque des revendications 1 à 3, dans lequel :
- le dispositif générateur d'ultrasons de puissance est un dispositif ultrasonore de contrôle (30), ledit dispositif ultrasonore de contrôle (30) propage une onde ultrasonore (31), dite de contrôle, dans le métal liquide (22), à travers une surface dite de couplage (23, 33), la surface de couplage étant une surface du substrat solide (21) s'étendant au contact du métal liquide (22) ;
- le substrat solide (21) est délimité par la surface de couplage (23, 33);
de telle sorte que lors de l'étape c), la mouillabilité de la surface du substrat solide (21), par le métal liquide (22), est augmentée de façon à améliorer une transmission de l'onde ultrasonore de contrôle (31) dans le métal liquide (22), à travers la surface de couplage (23,33).

11. Procédé selon la revendication 10, dans lequel le dispositif ultrasonore de contrôle (30) est placé à l'extérieur de l'enceinte (20), la surface de couplage (23) correspondant à une interface entre l'enceinte (20) et le métal liquide (22), à travers laquelle se propage l'onde ultrasonore de contrôle (31), le substrat solide (21) étant formé par une partie de l'enceinte délimitée par la surface de couplage (23).

12. Procédé selon la revendication 10, dans lequel le dispositif ultrasonore de contrôle (30) est confiné dans une enveloppe de confinement (35), l'enveloppe de confinement étant plongée dans le métal liquide (22), la surface de couplage (33) correspondant à une interface de l'enveloppe de confinement (35) avec le métal liquide (22), le substrat solide (21) étant formé par une partie de l'enveloppe de confinement (35) délimitée par la surface de couplage (33).

13. Procédé selon l'une quelconque des revendications 10 à 12, dans lequel l'enceinte (20) est une cuve d'un réacteur nucléaire, le métal liquide comportant du sodium ou du plomb.

## Patentansprüche

1. Verfahren zur Behandlung eines festen Substrats (21), das die folgenden Schritte umfasst:
a) Inkontaktbringen des festen Substrats (21) mit einem flüssigen Metall (22), das in einem Behälter eingeschlossen ist;
b) Ausbreitung einer als Leistungsultraschallwelle (11) bezeichneten Ultraschallwelle, die von einer Leistungsultraschallerzeugungsvorrichtung (10) in das flüssige Metall (22) emittiert wird, wobei sich die Leistungsultraschallwelle in dem flüssigen Metall (22) ausbreitet, bevor sie eine Oberfläche (21s) des festen Substrats (21) erreicht, sodass an der Oberfläche des Substrats die Leistungsdichte der Leistungsultraschallwelle (11) über einer Kavitationsschwelle des flüssigen Metalls liegt, wobei die Frequenz der Leistungsultraschallwelle im Bereich zwischen 40 kHz und 250 kHz liegt;
c) nach der Ausbreitung der Leistungsultraschallwelle (11), Erhalten von Kavitationsblasen im flüssigen Metall (22), wobei die Kavitationsblasen die Oberfläche (21s) des festen Substrats (21) erreichen, wobei die Wechselwirkung der Kavitationsblasen mit der Oberfläche (21s) des festen Substrats (21) die Benetzbarkeit derselben (21s) durch das flüssige Metall (22) erhöht und wobei die Leistungsultraschallwelle (11), die sich vom Leistungserzeuger (10) aus ausbreitet, eine als Grenzfläche (13) bezeichnete Oberfläche, die sich in Kontakt mit dem flüssigen Metall (22) erstreckt, durchquert, wobei das Verfahren eine Bildung von Kavitationsblasen innerhalb eines als Hyperkavitationskegel bezeichneten Kegels (15) umfasst, in dem die Dichte der Kavitationsblasen höher ist als außerhalb des Kegels, wobei der Hyperkavitationskegel (15) sich von der Grenzfläche (13) ausgehend in das flüssige Metall (22) erstreckt, wobei das Verfahren so ist, dass in Schritt c) das feste Substrat (21) außerhalb des Hyperkavitationskegels angeordnet ist.

2. Verfahren nach Anspruch 1, wobei sich in Schritt b) die Leistungsschallwelle (11) innerhalb des Behälters (20) über eine Ausbreitungsdistanz von mehr als 1 cm, und bevorzugt mehr als 5 cm, in dem flüssigen Metall (22) ausbreitet.

3. Verfahren nach Anspruch 1 oder 2, wobei die Grenzfläche (13) eine feste Wand ist, durch die sich die Leistungsultraschallwelle ausbreitet.

4. Verfahren nach einem der Ansprüche 1 bis 3, wobei das feste Substrat (21) ein Substrat aus Keramik oder ein metallisches Substrat ist, sodass das Metall, aus dem das Substrat besteht, eine Schmelztemperatur aufweist, die strikt höher ist als die des flüssigen Metalls (22), wobei das Verfahren die folgenden zusätzlichen Schritte umfasst:
d) Aussetzen des Substrats (21) der Leistungsultraschallwelle (11) während einer Expositionsdauer, bevorzugt im Bereich zwischen 1 Sekunde und 1 Minute, wobei das flüssige Metall (22) auf dem Substrat eine als Überzugsschicht (25) bezeichnete Schicht bildet;
e) Entfernen des Substrats aus dem Behälter;
f) nach dem Entfernen, Verfestigung des flüssigen Metalls, um eine Ablagerung (25) auf dem Substrat zu bilden.

5. Verfahren nach Anspruch 4, wobei das flüssige Metall (22) ein elektrisch leitendes Metall ist, sodass die in Schritt f) gebildete Ablagerung (25) eine elektrisch leitende Ablagerung ist.

6. Verfahren nach Anspruch 5, wobei das flüssige Metall Zinn oder Zink oder Blei umfasst.

7. Verfahren nach einem der Ansprüche 4 bis 6, wobei die Dicke der in Schritt f) gebildeten Ablagerung (25) im Bereich zwischen 5 µm und 2 mm liegt.

8. Verfahren nach einem der Ansprüche 1 bis 3, wobei das flüssige Metall (22) Aluminium umfasst.

9. Verfahren nach Anspruch 8, wobei das flüssige Metall (22) Magnesium in einem Massenanteil von weniger als 1 % umfasst.

10. Verfahren nach einem der Ansprüche 1 bis 3, wobei:
- die Leistungsultraschallerzeugungsvorrichtung eine Ultraschallprüfvorrichtung (30) ist, wobei die Ultraschallprüfvorrichtung (30) eine als Prüfultraschallwelle (31) bezeichnete Ultraschallwelle durch eine als Koppelfläche (23, 33) bezeichnete Oberfläche in das flüssige Metall (22) ausbreitet, wobei die Koppelfläche eine Oberfläche des festen Substrats (21) ist, die sich in Kontakt mit dem flüssigen Metall (22) erstreckt;
- das feste Substrat (21) durch die Koppelfläche (23, 33) begrenzt ist;
sodass in Schritt c) die Benetzbarkeit der Oberfläche des festen Substrats (21) durch das flüssige Metall (22) erhöht wird, um eine Übertragung der Prüfultraschallwelle (31) durch die Koppelfläche (23,33) in das flüssige Metall (22) zu verbessern.

11. Verfahren nach Anspruch 10, wobei die Ultraschallprüfvorrichtung (30) außerhalb des Behälters (20) platziert ist, wobei die Koppelfläche (23) einer Grenzfläche zwischen dem Behälter (20) und dem flüssigen Metall (22) entspricht, durch die sich die Ultraschallprüfwelle (31) ausbreitet, wobei das feste Substrat (21) von einem Teil des Behälters gebildet wird, der durch die Koppelfläche (23) begrenzt wird.

12. Verfahren nach Anspruch 10, wobei die Ultraschallprüfvorrichtung (30) in einer Einschlusshülle (35) eingeschlossen ist, wobei die Einschlusshülle in das flüssige Metall (22) eingetaucht ist, wobei die Koppelfläche (33) einer Grenzfläche der Einschlusshülle (35) mit dem flüssigen Metall (22) entspricht, wobei das feste Substrat (21) von einem Teil der Einschlusshülle (35) gebildet wird, der durch die Koppelfläche (33) begrenzt wird.

13. Verfahren nach einem der Ansprüche 10 bis 12, wobei der Behälter (20) ein Tank eines Kernreaktors ist, wobei das flüssige Metall Natrium oder Blei umfasst.

## Claims

1. A method of treating a solid substrate (21) comprising the following steps:
a) bringing the solid substrate into contact (21) with a liquid metal (22), confined inside an enclosure;
b) propagation of an ultrasonic wave, called a power wave (11), emitted by a power ultrasound generating device (10) in the liquid metal (22), the ultrasonic power wave propagating though the liquid metal (22) before reaching the surface (21s) of the solid substrate (21), in such a way that at said surface of the substrate the power density of the ultrasonic power wave (11) is greater than a cavitation threshold of the liquid metal, the frequency of the ultrasonic power wave being between 40 kHz and 250 kHz;
c) following the propagation of the ultrasonic power wave (11), obtaining cavitation bubbles (22) in the liquid metal, the cavitation bubbles reaching the surface (21s) of the solid substrate (21), the interaction of the cavitation bubbles with the surface (21s) of the solid substrate (21) increasing the wettability of the latter (21s) by the liquid metal (22) and in which the ultrasonic power wave (11) can in particular propagate from the power generator (10), and pass through a so-called interface surface (13) extending into contact with the liquid metal (22), the method comprising the formation of cavitation bubbles inside a cone (15), called a hyper-cavitation cone, in which the density of the cavitation bubbles is higher than outside the cone, the hyper-cavitation cone (15) extending within the liquid metal (22) from the interface surface (13), the method being such that in step c) the solid substrate (21) is arranged outside the hyper-cavitation cone.

2. Method according to claim 1, in which during step b), the acoustic power wave (11) propagates, inside the enclosure (20), within the liquid metal (22), at a propagation distance greater than 1 cm, and preferably greater than 5 cm.

3. Method according to claim 1 or 2, in which the interface surface (13) is a solid wall through which the ultrasonic power wave propagates.

4. Method according to any one of claims 1 to 3, in which the solid substrate (21) is a ceramic substrate, or a metal substate such as the metal comprising the substrate having a melting temperature strictly greater than that of the liquid metal (22), the method comprising the following additional steps:
d) exposing the substrate (21) to the ultrasonic power wave (11) for a period of exposure time, preferably between 1 second and 1 minute, the liquid metal (22) forming a layer, known as a coating layer (25) on the substrate;
e) removing the substrate from the enclosure;
f) after removal, solidification of the liquid metal, so as to form a deposit (25) on the substrate.

5. Method according to claim 4, in which the liquid metal (22) is an electrically conductive metal, such that the deposit (25) formed in step f) is an electrically conductive deposit.

6. Method according to claim 5, in which the liquid metal contains tin, or zinc, or lead.

7. Method according to any one of claims 4 to 6 in which the thickness of the deposit (25) formed in step f) is between 5 µm and 2 mm.

8. Method according to any of claims 1 to 3 in which the liquid metal (22) comprises aluminum.

9. Method according to claim 8, in which the liquid metal (22) contains magnesium in a mass fraction of less than 1%.

10. Method according to any one of claims 1 to 3 in which:
- the power ultrasound generating device is an ultrasonic control device (30), said ultrasonic device (30) propagates an ultrasonic wave (31), called a control wave, within the liquid metal (22), through a surface known as a coupling surface (23, 33), the coupling surface being a surface of the solid substrate (21) extending into contact with the liquid metal (22);
- the solid substrate (21) is delimited by the coupling surface (23, 33);
such that during step c), the wettability of the surface of the solid substrate (21) by the liquid metal (22) is increased so as to improve transmission of the ultrasonic control wave (31) within the liquid metal (22), through the coupling surface (23, 33).

11. Method according to claim 10, in which the ultrasonic control device (30) is placed outside the enclosure (20), the coupling surface (23) then corresponding to an interface between the enclosure (20) and the liquid metal (22) through which the ultrasonic control wave (31) propagates, the solid substrate (21) being formed by a part of the enclosure delimited by the coupling surface (23).

12. Method according to claim 10, in which the ultrasonic control device (30) may be confined within a containment system (35), the containment system being immersed in the liquid metal (22), the coupling surface (33) corresponding to an interface of the containment system (35) with the liquid metal (22), through which the ultrasonic control wave propagates, the solid substrate (21) being formed by a portion of the containment system (35) delimited by the coupling surface (33).

13. Method according to any one of claims 10 to 12, in which the enclosure (20) is a nuclear reactor vessel, the liquid metal containing sodium or lead.
